# EUROPEAN PATENT APPLICATION

(11) **EP 4 783 043 A1**
(43) Date of publication of application: **29.07.2026**
(21) Application number: 26152701.4
(22) Date of filing: 19.01.2026
(51) Int. Cl.: G06F 21/55, G05B 19/05

(54) **SYSTEMS AND METHODS FOR INDUSTRIAL DATA INTEGRATION PIPELINE WITH SECURITY EVENT TRIGGER AND DYNAMIC DEPLOYMENT**

(30) Priority: 22.01.2025 US 202519034223
(71) Applicant: Rockwell Automation Technologies, Inc., Mayfield Heights, OH 44124 (US)
(72) Inventor: Ott, Heiko, Mayfield Heights, OH 44124 (US); Bagul, Amol, Mayfield Heights, OH 44124 (US); Case, Clark L., Mayfield Heights, OH 44124 (US); Sachdev, Dipesh, Mayfield Heights, OH 44124 (US); Keller, Thomas, Mayfield Heights, OH 44124 (US); Kulkarni, Prasanna, Mayfield Heights, OH 44124 (US)
(74) Representative: Grünecker Patent- und Rechtsanwälte PartG mbB

(57) **Abstract**

A non-transitory computer readable medium storing instructions that, when executed by processing circuitry, cause the processing circuitry to receive, at a data integration pipeline, data indicative of an event or a condition, wherein the event or the condition is related to safety or security of an industrial automation system, generate an alert in response to the event or the condition, identifying an action to address the event or the condition, and automatically initiating the action.

## Description

### BACKGROUND

The present disclosure generally relates to detecting safety and/or security events and/or conditions in industrial automation systems, and/or the operational technology (OT) networks that support the industrial automation systems.

Safety and/or security events and/or conditions in an industrial automation system or an OT network that supports the industrial automation system may go undetected or undiscovered for a period of time, exposing the industrial automation system to safety and/or security risks, such as risk of a safety incident, an intrusion, a hack, data compromise, an exposed vulnerability, and so forth. Accordingly, additional techniques for detecting safety and/or security events and/or conditions in industrial automation systems, and/or the operational technology (OT) networks that support the industrial automation systems are needed.

This section is intended to introduce the reader to aspects of art that may be related to various aspects of the present disclosure, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

### BRIEF DESCRIPTION

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a non-transitory computer readable medium storing instructions that, when executed by processing circuitry, cause the processing circuitry to receive, at a data integration pipeline, data indicative of an event or a condition, wherein the event or the condition is related to safety or security of an industrial automation system, generate an alert in response to the event or the condition, identifying an action to address the event or the condition, and automatically initiating the action.

In another embodiment, a non-transitory computer readable medium storing instructions that, when executed by processing circuitry, cause the processing circuitry to receive a command to deploy a data integration pipeline configured to process operational data generated during operation of an industrial automation system, retrieve a data integration pipeline template from a library, wherein the data integration pipeline template includes a plurality of components, deploy the data integration pipeline to a runtime environment. The data integration pipeline is configured to receive data indicative of an event or a condition, wherein the event or the condition is related to safety or security of the industrial automation system, generate an alert in response to the event or the condition, identify an action to address the event or the condition, and automatically initiate the action.

In a further embodiment, a method includes receiving, at a data integration pipeline, data indicative of an event or a condition, wherein the event or the condition is related to safety or security of an industrial automation system, generating an alert in response to the event or the condition, identifying an action to address the event or the condition, and automatically initiating the action.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

### BRIEF DESCRIPTION OF THE DRAWINGS

These and other features, aspects, and advantages of the present embodiments will become better understood when the following detailed description is read with reference to the accompanying drawings in which like characters represent like parts throughout the drawings, wherein:
FIG. 1 is a schematic view of an industrial automation system, in accordance with embodiments presented herein;
FIG. 2 is a block diagram of example components that could be used in the industrial automation system of FIG. 1, in accordance with embodiments presented herein;
FIG. 3 is a perspective view of an example of the industrial automation system of FIG. 1, controlled by one or more industrial automation controllers, in accordance with an embodiment;
FIG. 4 is a block diagram of an example operational technology (OT) network, including the industrial automation system of FIG. 3, that coordinates with a container orchestration system, in accordance with an embodiment;
FIG. 5 illustrates a schematic of a data integration service that includes one or more data integration pipelines, each of which include one or more components configured to process data, in accordance with an embodiment;
FIG. 6 illustrates a schematic of the data integration service of FIG. 5, in accordance with an embodiment;
FIG. 7 illustrates a schematic of the data integration pipeline of FIGS. 5 and 6, configured to build context and data lineage as part of the pipeline's execution, in accordance with an embodiment;
FIG. 8 is a flow chart of a process for building the context and the data lineage as part of the pipeline's execution, in accordance with an embodiment;
FIG. 9 illustrates a schematic of the data integration pipeline of FIGS. 5 and 6 having a security event trigger, in accordance with an embodiment;
FIG. 10 is a flow chart of a process for deploying the data integration pipeline of FIG. 9 having the security event trigger, in accordance with an embodiment;
FIG. 11 illustrates a schematic for sandboxing untrusted components of the data integration pipeline of FIGS. 5 and 6, in accordance with an embodiment;
FIG. 12 is a flow chart of a process for sandboxing the untrusted components of the data integration pipeline of FIG. 11, in accordance with an embodiment;
FIG. 13 illustrates a schematic for policy-based authorization in the data integration pipeline of FIGS. 5 and 6, in accordance with an embodiment; and
FIG. 14 is a flow chart of a process for using the data integration pipeline of FIG. 13 to perform policy-based authorization, in accordance with an embodiment.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and enterprise-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Safety and/or security events and/or conditions in an industrial automation system or an OT network that supports the industrial automation system may go undetected or undiscovered for a period of time, exposing the industrial automation system to safety and/or security risks, such as risk of a safety incident, an intrusion, a hack, data compromise, an exposed vulnerability, and so forth. Accordingly, additional techniques for detecting safety and/or security events and/or conditions in industrial automation systems, and/or the operational technology (OT) networks that support the industrial automation systems are needed.

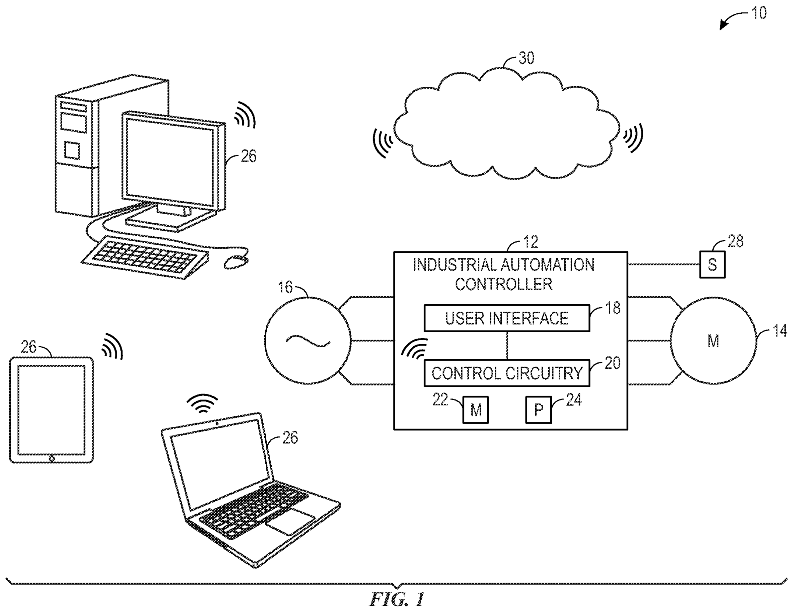

The present disclosure is directed to using an industrial data integration pipeline to detect safety and/or security events and/or conditions in industrial automation systems, and/or the OT networks that support the industrial automation systems. Specifically, the industrial data integration pipeline may be configured to receive data indicative of an event or condition related to safety or security of the industrial automation system, generate an alert in response to the event of condition, identify an action to address the event or condition, and automatically initiate the action (e.g., output a command to the industrial automation system). In some embodiments, the industrial data integration pipeline may include a safety component configured to receive operational data collected during operation of the industrial automation system and generate safety data from the operational data, extract safety data from the operational data, or both. In such embodiments, the safety component may be configured to compare one or more values from the operational data to one or more thresholds, one or more expected data ranges, one or more benchmark data points, or any combination thereof. Further, the safety component may be configured to identify one or more values in the operational data that are indicative of safety-related conditions that warrant investigation, action, or both. The safety component may also be configured to apply one or more safety policies, one or more algorithms, or both, to identify one or more safety-related conditions that warrant further investigation, action, or both. Additionally, the safety component may be configured to calculate one or more safety key performance indicators (KPIs) used to identify one or more safety-related conditions. The industrial data integration pipeline may also include a security component configured to receive the data from a security service and generate security data from the data, extract security data from the data, or both. In such embodiments, the security component may be configured to identify, from the data provided by the security service, one or more security-related conditions that warrant investigation, action, or both. In some embodiments, the data may be provided to the industrial data integration pipeline by an intrusion detection system. In some embodiments, the action may include shutting down some or all of industrial automation system, putting some or all of industrial automation system into safe mode, revoking access credentials for one or more devices, one or more personas, one or more profiles, or any combination thereof. The industrial data integration pipeline may further be configured to transmit the alert to a safety system associated with the industrial automation system. Additional details with regard to identifying safety and/or security events and/or conditions in industrial automation systems using an industrial data integration pipeline will be provided below with reference to FIGS. 1-10.

By way of introduction, FIG. 1 is a schematic view of an example industrial automation system 10 in which the embodiments described herein may be implemented. As shown, the industrial automation system 10 includes a controller 12 and an actuator 14 (e.g., a motor). The industrial automation system 10 may also include, or be coupled to, a power source 16. The power source 16 may include a generator, an external power grid, a battery, or some other source of power. The controller 12 may be a stand-alone control unit that controls multiple industrial automation components (e.g., a plurality of motors 14), a controller 12 that controls the operation of a single automation component (e.g., motor 14), or a subcomponent within a larger industrial automation system 10. In the instant embodiment, the controller 12 includes a user interface 18, such as a human machine interface (HMI), and control circuitry 20, which may include a memory 22 and a processor 24. The controller 12 may include a cabinet or some other enclosure for housing various components of the industrial automation system 10, such as a motor starter, a disconnect switch, etc.

The control circuitry 20 may be programmed (e.g., via computer readable code or instructions stored on the memory 22, such as a non-transitory computer readable medium, and executable by the processor 24) to provide signals for controlling the actuator 14. In certain embodiments, the control circuitry 20 may be programmed according to a specific configuration desired for a particular application. For example, the control circuitry 20 may be programmed to respond to external inputs, such as reference signals, alarms, command/status signals, etc. The external inputs may originate from one or more relays or other electronic devices. The programming of the control circuitry 20 may be accomplished through software or firmware code that may be loaded onto the internal memory 22 of the control circuitry 20 (e.g., via a locally or remotely located computing device 26) or programmed via the user interface 18 of the controller 12. The control circuitry 20 may respond to a set of operating parameters. The settings of the various operating parameters may determine the operating characteristics of the controller 12. For example, various operating parameters may determine the speed or torque of the motor 14 or may determine how the controller 12 responds to the various external inputs. As such, the operating parameters may be used to map control variables within the controller 12 or to control other devices communicatively coupled to the controller 12. These variables may include, for example, speed presets, feedback types and values, computational gains and variables, algorithm adjustments, status and feedback variables, programmable logic controller (PLC) control programming, and the like.

In some embodiments, the controller 12 may be communicatively coupled to one or more sensors 28 for detecting operating temperatures, voltages, currents, pressures, flow rates, and other measurable variables associated with the industrial automation system 10. With feedback data from the sensors 28, the control circuitry 20 may keep detailed track of the various conditions under which the industrial automation system 10 may be operating. For example, the feedback data may include conditions such as actual motor speed, voltage, frequency, power quality, alarm conditions, etc. In some embodiments, the feedback data may be communicated back to the computing device 26 for additional analysis.

The computing device 26 may be communicatively coupled to the controller 12 via a wired or wireless connection. The computing device 26 may receive inputs from a user defining an industrial automation project using a native application running on the computing device 26 or using a website accessible via a browser application, a software application, or the like. The user may define the industrial automation project by writing code, interacting with a visual programming interface, inputting or selecting values via a graphical user interface, or providing some other inputs. The user may use licensed software and/or subscription services to create, analyze, and otherwise develop the project. The computing device 26 may send a project to the controller 12 for execution. Execution of the industrial automation project causes the controller 12 to control components (e.g., motor 14) within the industrial automation system 10 through performance of one or more tasks and/or processes. In some applications, the controller 12 may be communicatively positioned in a private network and/or behind a firewall, such that the controller 12 does not have communication access outside a local network or subnet and is not in communication with any devices outside the firewall, other than the computing device 26. The controller 12 may collect feedback data during execution of the project, and the feedback data may be provided back to the computing device 26 for analysis. Feedback data may include, for example, one or more execution times, one or more alerts, one or more error messages, one or more alarm conditions, one or more temperatures, one or more pressures, one or more flow rates, one or more motor speeds, one or more voltages, one or more frequencies, and so forth. The project may be updated via the computing device 26 based on the analysis of the feedback data.

The computing device 26 may be communicatively coupled to a cloud server 30 or remote server via the internet, or some other network. In one embodiment, the cloud server 30 may be operated by the manufacturer of the controller 12, a software provider, a seller of the controller 12, a service provider, an operator of the controller 12, an owner of the controller 12, etc. The cloud server 30 may be used to help users create and/or modify projects, to help troubleshoot any problems that may arise with the controller 12, develop policies, or to provide other services (e.g., project analysis, enabling, restricting capabilities of the controller 12, data analysis, controller firmware updates, security, asset management, etc.). The remote/cloud server 30 may be one or more servers operated by the manufacturer, software provider, seller, service provider, operator, or owner of the controller 12. The remote/cloud server 30 may be disposed at a facility owned and/or operated by the manufacturer, software provider, seller, service provider, operator, or owner of the controller 12. In other embodiments, the remote/cloud server 30 may be disposed in a datacenter in which the manufacturer, software provider, seller, service provider, operator, or owner of the controller 12 owns or rents server space. In further embodiments, the remote/cloud server 30 may include multiple servers operating in one or more data center to provide a cloud computing environment.

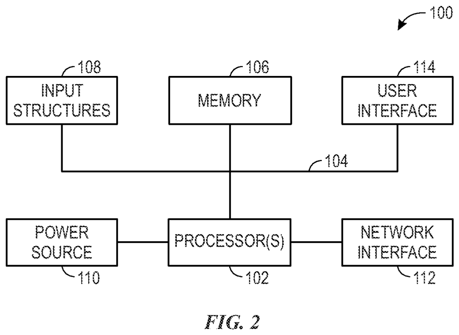

FIG. 2 illustrates a block diagram of example components of a computing device 100 that could be used as the computing device 26, the cloud/remote server 30, the controller 12, or some other device within the system 10 shown in FIG. 1. As used herein, a computing device 100 may be implemented as one or more computing systems including laptop, notebook, desktop, tablet, HMI, or workstation computers, as well as server type devices or portable, communication type devices, such as cellular telephones and/or other suitable computing devices.

As illustrated, the computing device 100 may include various hardware components, such as one or more processors 102, one or more busses 104, memory 106, input structures 108, a power source 110, a network interface 112, a user interface 114, and/or other computer components useful in performing the functions described herein.

The one or more processors 102 (e.g., processing circuitry) may include, in certain implementations, microprocessors configured to execute instructions stored in the memory 106 or other accessible locations. Alternatively, the one or more processors 102 may be implemented as application-specific integrated circuits (ASICs), field-programmable gate arrays (FPGAs), and/or other devices designed to perform functions discussed herein in a dedicated manner. As will be appreciated, multiple processors 102 or processing components may be used to perform functions discussed herein in a distributed or parallel manner.

The memory 106 may encompass any tangible, non-transitory medium for storing data or executable routines. Although shown for convenience as a single block in FIG. 2, the memory 106 may encompass various discrete media in the same or different physical locations. The one or more processors 102 may access data in the memory 106 via one or more busses 104.

The input structures 108 may allow a user to input data and/or commands to the device 100 and may include mice, touchpads, touchscreens, keyboards, controllers, and so forth. The power source 110 can be any suitable source for providing power to the various components of the computing device 100, including line and battery power. In the depicted example, the device 100 includes a network interface 112. Such a network interface 112 may allow communication with other devices on a network using one or more communication protocols. In the depicted example, the device 100 includes a user interface 114, such as a display that may display images or data provided by the one or more processors 102. The user interface 114 may include, for example, a monitor, a display, and so forth. As will be appreciated, in a real-world context a processor-based system, such as the computing device 100 of FIG. 2, may be employed to implement some or all of the present approach, such as performing the functions of the controller, the computing device 26, and/or the cloud/remote server 30 shown in FIG. 1, as well as other memory-containing devices.

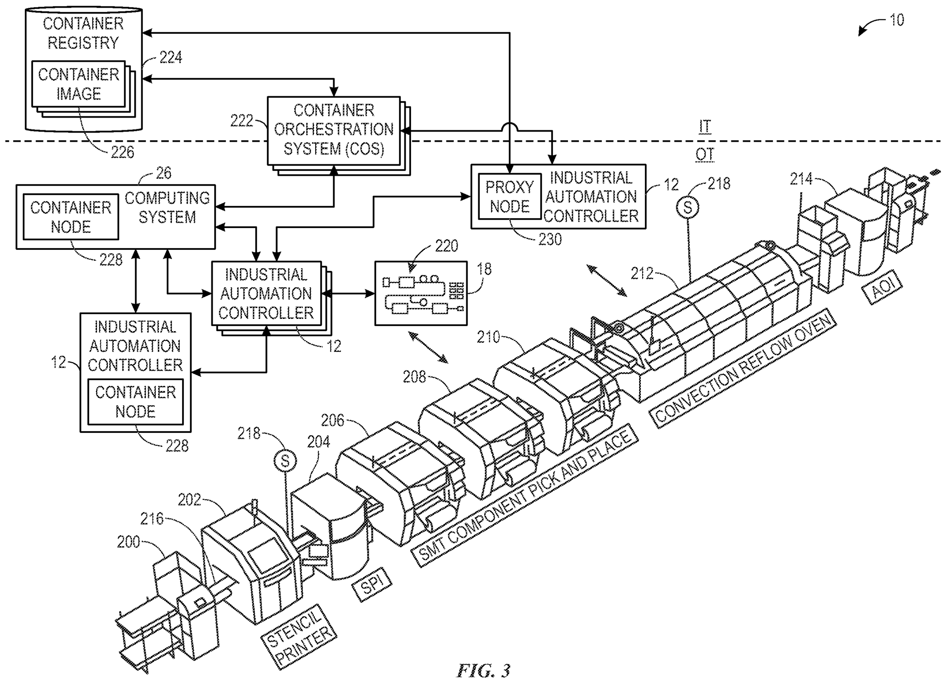

FIG. 3 is a perspective view of an example implementation of the industrial automation system 10 of FIG. 1. The industrial automation system 10 includes stations 200, 202, 204, 206, 208, 210, 212, 214 having machine components and/or machines to conduct functions within an automated process, such as printed circuit board assembly, as is depicted. The automated process may begin at a station 200 used for loading objects, such as substrates, into the industrial automation system 10 via a conveyor section 216. For example, objects may be transported along the conveyor section 216 to station 202 to perform a first action, such a printing solder paste to the substrate via stenciling. As objects exit from the station 202, the objects may be transported via the conveyor section 216 to a station 204 for solder paste inspection (SPI) to inspect printer results, to a station 206, 208, and 210 for surface mount technology (SMT) component placement, to a station 212 for convection reflow oven to melt the solder to make electrical couplings, and finally to a station 214 for automated optical inspection (AOI) to inspect the object manufactured (e.g., the manufactured printed circuit board). After the objects proceed through the various stations, the objects may be removed from the station 214, for example, for storage in a warehouse or for shipment. It should be understood, however, that, for other applications, the particular system, machine components, machines, stations, and/or conveyors may be different or specially adapted to the application.

For example, the industrial automation system 10 may include machinery to perform various operations in a compressor station, an oil refinery, a batch operation for making food items, chemical processing operations, brewery operations, mining operations, a mechanized assembly line, and so forth. Accordingly, the industrial automation system 10 may include a variety of operational components, such as electric motors, valves, pumps, actuators, heaters, chillers, temperature sensing elements, pressure sensors, or a myriad of machinery or devices used for manufacturing, processing, material handling, and other applications. The industrial automation system 10 may also include electrical equipment, hydraulic equipment, compressed air equipment, steam equipment, mechanical tools, protective equipment, refrigeration equipment, power lines, hydraulic lines, steam lines, and the like. Some example types of equipment may include mixers, machine conveyors, tanks, skids, specialized original equipment manufacturer machines, and the like. In addition to the equipment described above, the industrial automation system 10 may also include motors, protection devices, switchgear, compressors, and the like. Each of these described operational components may correspond to and/or generate a variety of OT data regarding operation, status, sensor data, operational modes, alarm conditions, or the like, that may be desirable to output for analysis with IT data from an IT network, for storage in an IT network, for analysis with expected operation set points (e.g., thresholds), or the like.

In certain embodiments, one or more properties of the industrial automation system 10 equipment, such as the stations 200, 202, 204, 206, 208, 210, 212, 214, may be monitored and controlled by one or more industrial automation controllers 12 for regulating control variables. For example, sensing devices (e.g., sensors 218) may monitor various properties of the industrial automation system 10 and may be used by the automation controller(s) 12 at least in part in adjusting operations of the industrial automation system 10 (e.g., as part of a control loop). In some cases, the industrial automation system 10 may be associated with devices used by other equipment. For instance, scanners, gauges, valves, flow meters, and the like may be disposed on or within the industrial automation system 10. Here, the industrial automation controller(s) 12 may receive data from the associated devices and use the data to perform their respective operations more efficiently. For example, an industrial automation controller 12 of the industrial automation system 10 associated with a motor drive may receive data regarding a temperature of a connected motor and may adjust operations of the motor drive based on the data.

The industrial automation controllers 12 may include or be communicatively coupled to the display/operator interface 18 (e.g., a human-machine interface (HMI)) and to devices of the industrial automation system 10. It should be understood that any suitable number of industrial automation controllers 12 may be used in a particular industrial automation system 10 embodiment. The industrial automation controllers 12 may facilitate representing components of the industrial automation system 10 through programming objects that may be instantiated and executed to provide simulated functionality similar or identical to the actual components, as well as visualization of the components, or both, on the display/operator interface 18. The programming objects may include code and/or instructions stored in the industrial automation controllers 12 and executed by processing circuitry of the industrial automation controllers 12. The processing circuitry may communicate with memory circuitry to permit the storage of the component visualizations.

As illustrated, the display/operator interface 18 may be configured to depict representations 220 of the components of the industrial automation system 10. The industrial automation controllers 12 may use data transmitted by the sensors 218 to update visualizations of the components via changing one or more statuses, states, and/or indications of current operations of the components. These sensors 218 may be any suitable device adapted to provide information regarding process conditions. Indeed, the sensors 218 may be used in a process loop (e.g., control loop) that may be monitored and controlled by the industrial automation controllers 12. As such, a process loop may be activated based on process inputs (e.g., an input from the sensor 218) or direct input from a person via the display/operator interface 18. The person operating and/or monitoring the industrial automation system 10 may reference the display/operator interface 18 to determine various statuses, states, and/or current operations of the industrial automation system 10 and/or for a particular component. Furthermore, the person operating and/or monitoring the industrial automation system 10 may adjust to various components to start, stop, power-down, power-on, or otherwise adjust an operation of one or more components of the industrial automation system 10 through interactions with control panels or various input devices.

The industrial automation system 10 may be considered a data-rich environment with several processes and operations that each respectively generate a variety of data. For example, the industrial automation system 10 may be associated with material data (e.g., data corresponding to substrate or raw material properties or characteristics), parametric data (e.g., data corresponding to machine and/or station performance, such as during operation of the industrial automation system 10), test results data (e.g., data corresponding to various quality control tests performed on a final or intermediate product of the industrial automation system 10), or the like, that may be organized and sorted as OT data. In addition, sensors 218 may gather OT data indicative of one or more operations of the industrial automation system 10 or the industrial automation controllers 12. In this way, the OT data may be analog data or digital data indicative of measurements, statuses, alarms, or the like associated with operation of the industrial automation system 10 or the industrial automation controllers 12.

The industrial automation controllers 12 described above may operate in an OT space in which OT data is used to monitor and control OT assets (e.g., OT devices), such as the equipment illustrated in the stations 200, 202, 204, 206, 208, 210, 212, 214 of the industrial automation system 10 or other industrial equipment. The OT space, environment, or network generally includes direct monitoring and control operations that are coordinated by the industrial automation controllers 12 and a corresponding OT asset. For example, a programmable logic controller (PLC) may operate in the OT network to control operations of an OT asset (e.g., drive, motor, and/or high-level controllers). The industrial automation controllers 12 may be specifically programmed or configured to communicate directly with the respective OT assets.

A container orchestration system 222, on the other hand, may operate in an information technology (IT) environment. That is, the container orchestration system 222 may include a cluster of multiple computing devices that coordinates an automatic process of managing or scheduling work of individual containers for applications within the computing devices of the cluster. In other words, the container orchestration system 222 may be used to automate various tasks at scale across multiple computing devices. By way of example, the container orchestration system 222 may automate tasks such as configuring and scheduling deployment of containers, provisioning and deploying containers, determining availability of containers, configuring applications in terms of the containers that they run in, scaling of containers to equally balance application workloads across an infrastructure, allocating resources between containers, performing load balancing, traffic routing, and service discovery of containers, performing health monitoring of containers, securing the interactions between containers, and the like. In any case, the container orchestration system 222 may use configuration files to determine a network protocol to facilitate communication between containers, a storage location to save logs, and the like. The container orchestration system 222 may also schedule deployment of containers into clusters and identify a host (e.g., node) that may be best suited for executing the container. After the host is identified, the container orchestration system 222 may manage the lifecycle of the container based on predetermined specifications.

With the foregoing in mind, it should be noted that containers refer to technology for packaging an application along with its runtime dependencies. That is, containers include applications that are decoupled from an underlying host infrastructure (e.g., operating system). By including the runtime dependencies with the container, the container may perform in the same manner regardless of the host in which it is operating. In some embodiments, containers may be stored in a container registry 224 as container images 226. The container registry 224 may be any suitable data storage or database that may be accessible to the container orchestration system 222. The container image 226 may correspond to an executable software package that includes the tools and data employed to execute a respective application. That is, the container image 226 may include related code for operating the application, application libraries, system libraries, runtime tools, default values for various settings, and the like.

By way of example, an integrated development environment (IDE) tool may be employed by a user to create a deployment configuration file that specifies a desired state for the collection of nodes of the container orchestration system 222. The deployment configuration file may be stored in the container registry 224 along with the respective container images 226 associated with the deployment configuration file. The deployment configuration file may include a list of different pods and a number of replicas for each pod that should be operating within the container orchestration system 222 at any given time. Each pod may correspond to a logical unit of an application, which may be associated with one or more containers. The container orchestration system 222 may coordinate the distribution and execution of the pods listed in the deployment configuration file, such that the desired state is continuously met. In some embodiments, the container orchestration system 222 may include a primary node that retrieves the deployment configuration files from the container registry 224, schedules the deployment of pods to the connected nodes, and ensures that the desired state specified in the deployment configuration file is met. For instance, if a pod stops operating on one node, the primary node may receive a notification from the respective secondary node that is no longer executing the pod and deploy the pod to another secondary node to ensure that the desired state is present across the cluster of nodes.

As mentioned above, the container orchestration system 222 may include a cluster of computing devices, computing systems, or container nodes that may work together to achieve certain specifications or states, as designated in the respective container. In some embodiments, container nodes 228 may be integrated within industrial automation controllers 12 as shown in FIG. 3. That is, container nodes 228 may be implemented by the industrial automation controllers 12, such that they appear as secondary nodes to the primary node in the container orchestration system 222. In this way, the primary node of the container orchestration system 222 may send commands to the container nodes 228 that are also configured to perform applications and operations for the respective industrial equipment.

With this in mind, the container nodes 228 may be integrated with the industrial automation controllers 12, such that they serve as passive-indirect participants, passive-direct participants, or active participants of the container orchestration system 222. As passive-indirect participants, the container nodes 228 may respond to a subset of all of the commands that may be issued by the container orchestration system 222. In this way, the container nodes 228 may support limited container lifecycle features, such as receiving pods, executing the pods, updating a respective filesystem to included software packages for execution by the industrial automation controller 12, and reporting the status of the pods to the primary node of the container orchestration system 222. The limited features implementable by the container nodes 228 that operate in the passive-indirect mode may be limited to commands that the respective industrial automation controller 12 may implement using native commands that map directly to the commands received by the primary node of the container orchestration system 222. Moreover, the container node 228 operating in the passive-indirect mode of operation may not be capable to push the packages or directly control the operation of the industrial automation controller 12 to execute the package. Instead, the industrial automation controller 12 may periodically check the file system of the container node 228 and retrieve the new package at that time for execution.

As passive-direct participants, the container nodes 228 may operate as a node that is part of the cluster of nodes for the container orchestration system 222. As such, the container node 228 may support the full container lifecycle features. That is, container node 228 operating in the passive-direct mode may unpack a container image and push the resultant package to the industrial automation controller 12, such that the industrial automation controller 12 executes the package in response to receiving it from the container node 228. As such, the container orchestration system 222 may have access to a secondary node that may directly implement commands received from the primary node onto the industrial automation controller 12.

In the active participant mode, the container node 228 may include a computing module or system that hosts an operating system (e.g., Linux) that may continuously operate a container host daemon that may participate in the management of container operations. As such, the active participant container node 228 may perform any operations that the primary node of the container orchestration system 222 may perform. By including a container node 228 operating in the OT space, the container orchestration system 222 is capable of extending its management operations into the OT space (e.g., the container node 228 may provision devices in the OT space).

A proxy node 230, which may be an instance of the container node 228 or a different container node 228, may provide bi-directional coordination between the IT space and the OT space, and the like. For instance, the container node 228 operating as the proxy node 230 may intercept orchestration commands and cause industrial automation controller 12 to implement appropriate machine control routines based on the commands. The industrial automation controller 12 may confirm the machine state to the proxy node 230, which may then reply to the primary node of the container orchestration system 222 on behalf of the industrial automation controller 12.

Additionally, the industrial automation controller 12 may share an industrial automation device tree via the proxy node 230. As such, the proxy node 230 may provide the primary node with state data, address data, descriptive metadata, versioning data, certificate data, key information, and other relevant parameters concerning the automation controller 12. Moreover, the proxy node 230 may issue requests targeted to other automation controllers 12 to control other industrial automation devices. For instance, the proxy node 230 may translate and forward commands to a target industrial automation device using one or more OT communication protocols, may translate and receive replies from the industrial automation devices, and the like. As such, the proxy node 230 may perform health checks, provide configuration updates, send firmware patches, execute certificate refreshes, and other OT operations for other industrial automation devices.

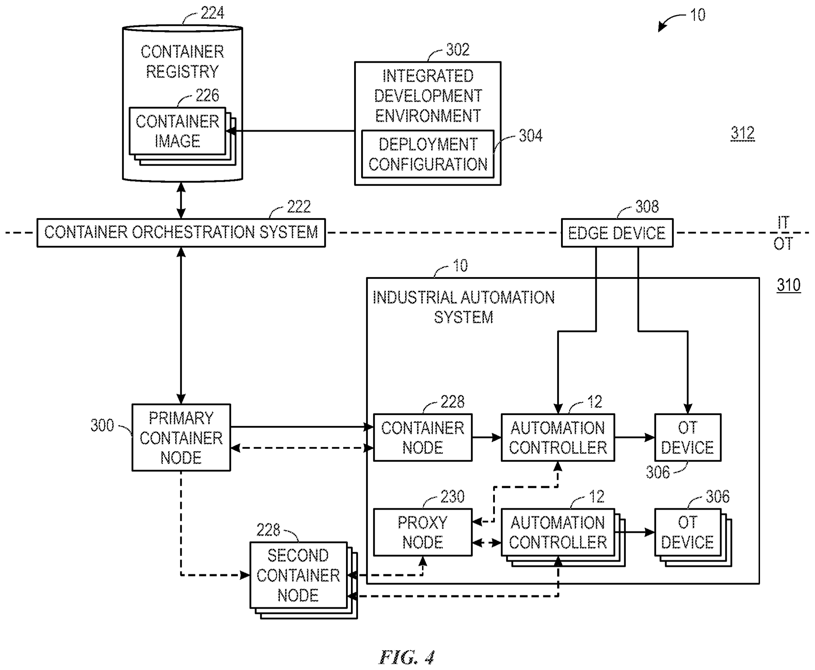

FIG. 4 illustrates a block diagram that depicts the relative positions of the container node 228 and the proxy node 230 with respect to the container orchestration system 222. As mentioned above, the container orchestration system 222 may include a collection of nodes that are used to achieve a desired state of one or more containers across multiple nodes. As shown in FIG. 4, the container orchestration system 222 may include a primary node 300 that may execute control plane processes for the container orchestration system 222. The control plane processes may include the processes that enable the container orchestration system 222 to coordinate operations of the container nodes 228 to meet the desired states. As such, the primary container node 300 may execute an application programming interface (API) for the container orchestration system 222, a scheduler component, core resource controllers, and the like. By way of example, the primary container node 300 may coordinate all of the interactions between nodes of the cluster that make up the container orchestration system 222. Indeed, the primary container node 300 may be responsible for deciding the operations that will run on container nodes 228 including scheduling workloads (e.g., containerized applications), managing the workloads' lifecycle, scaling, and upgrades, managing network and storage resources for the workloads, and the like. The primary container node 300 may run an API server to handle requests and status updates received from the container nodes 228.

By way of operation, an integrated development environment (IDE) tool 302 may be used by an operator to develop a deployment configuration file 304. As mentioned above, the deployment configuration file 304 may include details regarding the containers, the pods, constraints for operating the containers/pods, and other information that describe a desired state of the containers specified in the deployment configuration file 304. In some embodiments, the deployment configuration file 304 may be generated in a YAML file, a JSON file, or other suitable file format that is compatible with the container orchestration system 222. After the IDE tool 302 generates the deployment configuration file 304, the IDE tool 302 may transmit the deployment configuration file 304 to the container registry 224, which may store the file along with container images 226 representative of the containers stored in the deployment configuration file 304.

In some embodiments, the primary container node 300 may receive the deployment configuration file 304 via the container registry 224, directly from the IDE tool 302, or the like. The primary container node 300 may use the deployment configuration file 304 to determine a location to gather the container images 226, determine communication protocols to use to establish networking between container nodes 228, determine locations for mounting storage volumes, locations to store logs for the containers, and the like.

Based on the desired state provided in the deployment configuration file 304, the primary container node 300 may deploy containers to the container host nodes 228. That is, the primary container node 300 may schedule the deployment of a container based on constraints (e.g., CPU or memory availability) provided in the deployment configuration file 304. After the containers are operating on the container nodes 228, the primary container node 300 may manage the lifecycle of the containers to ensure that the containers specified by the deployment configuration file 304 are operating according to the specified constraints and the desired state.

Keeping the foregoing in mind, the industrial automation controller 12 may not use an operating system (OS) that is compatible with the container orchestration system 222. That is, the container orchestration system 222 may be configured to operate in the IT space that involves the flow of digital information. In contrast, the industrial automation controller 12 may operate in the OT space that involves managing the operation of physical processes and the machinery used to perform those processes. For example, the OT space may involve communications that are formatted according to OT communication protocols, such as FactoryTalk LiveData, EtherNet/IP, Common Industrial Protocol (CIP), OPC Direct Access (e.g., machine to machine communication protocol for industrial automation developed by the OPC Foundation), OPC Unified Architecture (OPCUA), or any suitable OT communication protocol (e.g. DNP3, Modbus, Profibus, LonWorks, DALI, BACnet, KNX, EnOcean). Because the industrial automation controllers 12 operate in the OT space, the industrial automation controller 12 may not be capable of implementing commands received via the container orchestration system 222.

In certain embodiments, the container node 228 may be programmed or implemented in the industrial automation controller 12 to serve as a node agent that can register the industrial automation controller 12 with the primary container node 300. The node agent may or may not be the same as the proxy node 230 shown in FIG. 3. For example, the industrial automation controller 12 may include a PLC that cannot support an operating system (e.g., Linux) for receiving and/or implementing requested operations issued by the container orchestration system 222. However, the PLC may perform certain operations that may be mapped to certain container events. As such, the container node 228 may include software and/or hardware components that may map certain events or commands received from the primary container node 300 into actions that may be performed by the PLC. After converting the received command into a command interpretable by the PLC, the container node 228 may forward the mapped command to the PLC that may implement the mapped command. As such, the container node 228 may operate as part of the cluster of nodes that make up the container orchestration system 222, while a first industrial automation controller 12 (e.g., PLC) that coordinates the OT operations for a second OT device 306 in the industrial automation system 10. The first industrial automation controller 12 may include a controller, such as a PLC, a high-level controller (HLC), a programmable automation controller (PAC), or any other controller that may monitor, control, and operate an industrial automation device or component (e.g., an OT device 306).

The OT device 306 may correspond to an industrial automation device or component and may include any suitable industrial device that operates in the OT space. As such, the OT device 306 may be involved in adjusting physical processes being implemented via the industrial system 10. In some embodiments, the OT device 306 may include motors, contactors, starters, sensors, drives, relays, protection devices, switchgear, compressors. In addition, the OT device 306 may also be related to various industrial equipment such as mixers, machine conveyors, tanks, skids, specialized original equipment manufacturer machines, and the like. The OT device 306 may also be associated with devices used by the equipment such as scanners, gauges, valves, flow meters, and the like.

In the present embodiments described herein, the industrial automation controller 12 may thus perform actions based on commands received from the container node 228. By mapping certain container lifecycle states into appropriate corresponding actions implementable by the industrial automation controller 12, the container node 228 enables program content for the industrial automation controller 12 to be containerized, published to certain registries, and deployed using the primary container node 300, thereby bridging the gap between the IT-based container orchestration system 222 and the OT-based industrial automation controller 12.

In some embodiments, the container node 228 may operate in an active mode, such that the container node may invoke container orchestration commands for other container nodes 228. For example, a proxy node 230 may operate as a proxy or gateway node that is part of the container orchestration system 222. The proxy node 230 may be implemented in a sidecar computing module that has an operating system (OS) that supports the container host daemon. In another embodiment, the proxy node 230 may be implemented directly on a core of the industrial automation controller 12 that is configured (e.g., partitioned), such that the industrial automation controller 12 may operate using an operating system that allows the container node 228 to execute orchestration commands and serve as part of the container orchestration system 222. In either case, the proxy node 230 may serve as a bi-directional bridge for IT/OT orchestration that enables automation functions to be performed in IT devices based on OT data and in industrial automation controllers 12 and OT devices 306 based on IT data. For instance, the proxy node 230 may acquire industrial automation device tree data, state data for an industrial automation device, descriptive metadata associated with corresponding OT data, versioning data for industrial automation controllers 12 and OT devices 306, certificate/key data for the industrial automation device, and other relevant OT data via OT communication protocols. The proxy node 230 may then translate the OT data into IT data that may be formatted to enable the primary container node 300 to extract relevant data (e.g., machine state data) to perform analysis operations and to ensure that the container orchestration system 222 and the connected industrial automation controllers 12 are operating at the desired state. Based on the results of its scheduling operations, the primary container node 300 may issue supervisory control commands to targeted industrial automation device via the proxy nodes 230, which may translate and forward the translated commands to the respective industrial automation controller 12 via the appropriate OT communication protocol.

In addition, the proxy node 230 may also perform certain supervisory operations based on its analysis of the machine state data of the respective industrial automation controller 12. As a result of its analysis, the proxy node 230 may issue commands and/or pods to other nodes that are part of the container orchestration system 222. For example, the proxy node 230 may send instructions or pods to other secondary container nodes 228 that may be part of the container orchestration system 222. The secondary container nodes 228 may corresponds to other container nodes 228 that are communicatively coupled to other industrial automation controllers 12 for controlling other OT devices 306. In this way, the proxy node 230 may translate or forward commands directly to other industrial automation controllers 12 via certain OT communication protocols or indirectly via the other secondary container nodes 228 associated with the other industrial automation controllers 12. In addition, the proxy node 230 may receive replies from the industrial automation controllers 12 via the OT communication protocol and translate the replies, such that the nodes in the container orchestration system 222 may interpret the replies. In this way, the container orchestration system 222 may effectively perform health checks, send configuration updates, provide firmware patches, execute certificate refreshes, and provide other services to OT devices 306 in a coordinated fashion. That is, the proxy node 230 may enable the container orchestration system to coordinate the activities of multiple industrial automation controllers 12 to achieve a collection of desired machine states for the connected OT devices 306.

As shown in FIG. 4, the industrial automation system 10 may include one or more edge devices 308 that interact with OT assets (e.g., industrial automation controllers 12, OT devices 306, etc.) within the industrial automation system 10. As used herein, an edge device 308 is a device within the industrial automation system 10 that controls data flow within the industrial automation system 10 (e.g., an OT network 310) as well as between the industrial automation system 10 (e.g., the OT network 310) and an IT network 312, cloud resources, and/or the internet. For example, the edge device 308 may be a router, a network switch, a computing device, a mobile device, a server, and internet of things (IoT) device, or the like. In certain embodiments, the edge device 308 may receive data from the OT network 310 that may include, for example, an enterprise system, a server device, a plant management system, or the like. The enterprise system may include software and/or hardware components that support business processes, information flows, reporting, data analytics, and the like for an enterprise. The server device may manage communication between the components of the industrial automation system 10. The plant management system may include any suitable management computing system that receives data from a number of automation controllers 12 and/or industrial automation systems 10. As such, the plant management system may track operations of one or more facilities and one or more locations. In addition, the plant management system may issue control commands to the components of the industrial automation system 10.

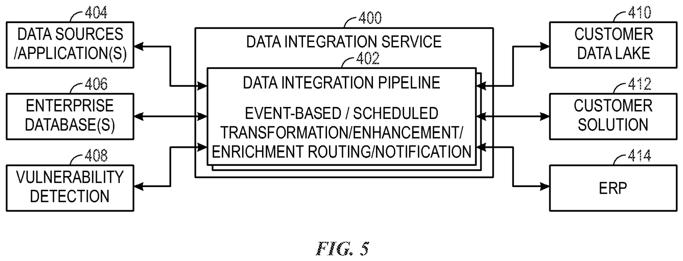

During operation of the industrial automation system 10, various components of the industrial automation system 10, such as the OT devices 306, the automation controllers 12, and so forth, may generate data that is useful in monitoring and assessing performance of the industrial automation system 10. However, the data may come from many different sources, be in many different formats/units, and/or otherwise be difficult to understand. Further, the enterprise operating the industrial automation system 10 may utilize one or more products and/or services to analyze data, recommend actions, and so forth. Accordingly, the enterprise may utilize a data integration service that includes one or more data integration pipelines. FIG. 5 is a schematic of a data integration service 400 that includes one or more data integration pipelines 402, each of which include one or more components configured to receive data (e.g., from a data source, another component, etc.), perform some action on the data that transforms the data (e.g., process the data, analyze the data, add context to the data, generate data lineage, organize the data, transform the data, etc.), and then output the data (e.g., to another component, to an outside product/service/application, for storage, for integration, for display, for incorporation in a dashboard, widget, or other graphical user interface, and so forth). Each of the components may include one or more pieces of software, code, scripts, etc., which may be instantiated and executed in a container, on a compute surface of a device having a processor, and/or on a computing device. Further, the data integration pipeline 402 may utilize multiple components distributed across multiple containers, computer surfaces, devices, etc.

As shown, the data integration pipeline 402 may receive data from one or more data sources and/or applications 404. For example, the data integration pipeline 402 may receive data from an OT device, an industrial automation controller, an edge device, an industrial automation data acquisition and/or monitoring application, and so forth. In some embodiments, the data integration pipeline 402 may be initiated in response to an event occurring or on a scheduled basis (e.g., every 5 minutes, every 10 minutes, every 15 minutes, every 30 minutes, hourly, every 2 hours, every 4 hours, every 6 hours, every 8 hours, every 12 hours, at the end of each shift, daily, weekly, bi-weekly, monthly, quarterly, and so forth). Initiation may include, for example, the container orchestration system and/or a control plane, which may or may not be part of the container orchestration system, deploying one or more containers, and/or deploying one or more pipeline components to deployed containers, compute surfaces, devices, etc. In other embodiments, the data integration pipeline 402 may persist and the data may be transmitted to the data integration pipeline 402 by the data sources and/or applications 404 in response to an event occurring or on a scheduled basis (e.g., every 5 minutes, every 10 minutes, every 15 minutes, every 30 minutes, hourly, every 2 hours, every 4 hours, every 6 hours, every 8 hours, every 12 hours, at the end of each shift, daily, weekly, bi-weekly, monthly, quarterly, and so forth). The data integration pipeline 402 receives the data and utilizes one or more components of the data integration pipeline 402 to process the data. If the data integration pipeline 402 utilizes multiple components to process the data, the components may operate in series (e.g., a first component performs a first task on the data and outputs modified data to a second component that performs a second task), in parallel (e.g., a first component performs a first task on the data while a second component performs a second task on the data at the same time), or some combination thereof. Accordingly, the various components of the data integration pipeline 402 may transform data, enhance data, enrich data, and so forth individually or in coordination with one another. Further, in response to results of processing data, the data integration pipeline 402 may be configured to route data and/or notifications to various internal components, devices, personas, etc. and/or external products/services/entities.

In some embodiments, the data integration pipeline 402 may receive data (e.g., sensor data, operational data, event data, log data, trace data, time series data, etc.) from multiple data sources and/or applications 404. Further, during or following the processing of the data, the data integration pipeline 402 may output data to the data sources and/or applications 404. For example, in some embodiments, the data integration pipeline 402 may process data collected from a data source 404 (e.g., an automation controller) and generate an alarm or instruction for the data source 404 to change something about its operations (e.g., adjust an operating parameter, go into a safe mode, etc.). Further, in other embodiments, the data integration pipeline 402 may receive data from a data source 404, process the data, and then provide an output (e.g., processed data, an alarm, a notification, an alert, a result, a recommendation, etc.) to an application 404 or other data source 404, different from the data source 404 that provided the data.

Further, as shown, the data integration pipeline 402, prior to processing data, during processing of data, and/or following processing of data, may retrieve data to and/or send data to one or more enterprise databases 406 (e.g., centralized repositories that stores an enterprise's data from various sources). For example, the data integration pipeline 402 may receive data from a data source 404, retrieve data from an enterprise database 406, and use the data retrieved from the enterprise database 406 in processing the data. In such embodiments, the data retrieved from the enterprise database 406 may include benchmark data, historical data, baseline data, policies, data models, scripts, etc. In some embodiments, the data integration pipeline 402 may be configured to receive data, process the data, and transmit or write the processed data or results of the data processing to an enterprise database 406.

In some embodiments, the data integration pipeline 402 may receive data from, or transmit data to, a vulnerability detection product or service 408. For example, in some embodiments, the data integration pipeline 402 may receive one or more notifications or alerts from the vulnerability detection 408 indicating that a vulnerability or intrusion has been detected. In response, the data integration pipeline 402 may notify other components of the vulnerability or intrusion, and/or take action itself to address the vulnerability or intrusion, or safeguard the industrial automation system against the vulnerability or intrusion. In some embodiments, processing the received data may expose a vulnerability or intrusion and the data integration pipeline 402 may notify the vulnerability detection 408 of the vulnerability or intrusion.

In some embodiments, the data integration pipeline 402 may receive data from, or transmit data to, a customer data lake 410. For example, the data integration pipeline 402 may receive data from a data source 404, retrieve data from the customer data lake 410, and use the data retrieved from the customer data lake 410 in processing the data. In such embodiments, the data retrieved from the customer data lake 410 may include benchmark data, historical data, baseline data, policies, data models, scripts, etc. In some embodiments, the data integration pipeline 402 may be configured to receive data, process the data, and transmit or write the processed data or results of the data processing to the customer data lake 410.

In some embodiments, the data integration pipeline 402 may receive data from, or transmit data to, a customer solution 412. For example, the data integration pipeline 402 may receive data from a data source 404, retrieve data from a customer solution 412 (e.g., benchmark data, historical data, threshold data, baseline data, policies, data models, etc.), and use the data retrieved from the customer solution 412 in processing the data. In some embodiments, the data integration pipeline 402 may be configured to receive data, process the data, and transmit or write the processed data or results of the data processing to the customer solution 412, transmit a notification or alert to the customer solution 412, and so forth.

In some embodiments, the data integration pipeline 402 may receive data from, or transmit data to, an enterprise resource planning (ERP) product or service 414. For example, the data integration pipeline 402 may receive data from a data source 404, retrieve data from an ERP 414, and use the data retrieved from the ERP 414 in processing the data. In such embodiments, the data retrieved from the enterprise database 406 may include resource data, specifications, benchmark data, historical data, baseline data, policies, data models, scripts, etc. In some embodiments, the data integration pipeline 402 may be configured to receive data, process the data, and transmit or write the processed data or results of the data processing to the ERP 414.

As is described in more detail below, the data integration pipeline 402 may be flexible and utilized to perform a wide variety of tasks. For example, in one embodiment, the data integration pipeline 402 may utilize rules engines that are part of one or more device profiles to apply rules and/or perform calculations on an edge device and trigger events that get sent to the cloud (or elsewhere). In another embodiment, the data integration pipeline 402 may be configured to support bidirectional communication between OT devices (e.g., automation controllers) and relational database systems. In other embodiments, the data integration pipeline 402 may be configured to interface with a historical namespace to interact with time series data, templates, assets, event frames, etc. and subscribe to changes in various objects. In further embodiments, the data integration pipeline 402 may be configured to create batches of distributed control system (DCS) activities, receive batch execution updates, and receive alarms/events. In other embodiments, the data integration pipeline 402 may be configured to receive material information and operations definitions, process bills of materials, unit of measurement conversions, operations schedules, operations performance, and so forth. Accordingly, the data integration pipeline 402 may be configured to work across application workflows to notify and trigger actions in connected applications as part of customer solutions.

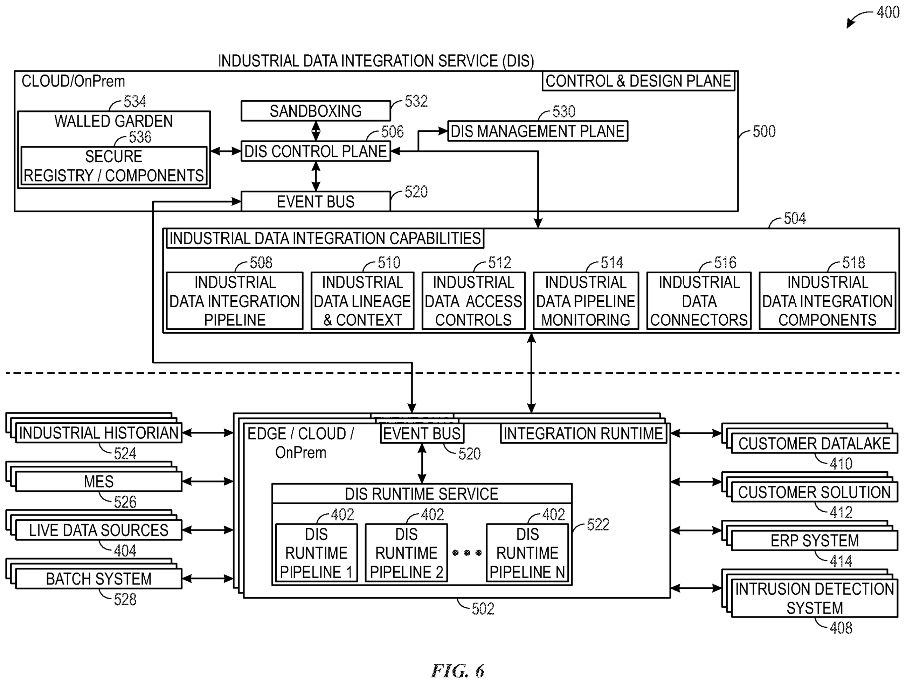

With the foregoing in mind, FIG. 6 illustrates a schematic of the data integration service 400. As shown, the data integration service 400 includes a control and design plane 500, which deploys and manages multiple integration runtime environments 502. The control and design plane 500 may have access to a library of capabilities and components 504, which may be retrieved from the library 504 and deployed to the integration runtime environments 502, which may be instantiated in a container, on a computing device (e.g., a server, a desktop computer, a laptop computer, a tablet, a mobile device, etc.), on a compute surface of a device having a processor, on an edge device, in the cloud, etc.

For example, a control plane 506 of the control and design plane 500 may have access to the library of capabilities and components 504. The control plane 506 may be configured to retrieve items from the library of capabilities and components 504 to deploy to the integration runtime environments 502, define new items in the library of capabilities and components 504, modify existing items in the library of capabilities and components 504, and/or remove items from the library of capabilities and components 504. As shown, the library of capabilities and components 504 may include, for example, industrial data integration pipeline templates 508, industrial data lineage and context components 510, industrial data access controls 512, industrial data pipeline monitoring components 514, industrial data connectors 516, industrial data integration components 518, and the like.

The industrial data integration pipeline templates 508 include templates for defining various components that combine to form an industrial data integration pipeline 402. In addition to the various components of the industrial data integration pipeline 402, the industrial data integration pipeline templates 508 may define various characteristics of the pipeline, such as network protocols used, encryption protocols used, standards adhered to, sampling rates, transmission rates, threshold values, windows of acceptable values, criteria for generating an event/alarm notification, accessibility guidelines, and so forth.

The industrial data lineage and context components 510 may include one or more components that may be used by one or more data integration pipelines 402 to generate and/or extract data lineage information (e.g., to establish that the data has not been tampered with, what components handles the data and what did each of the components do to the data?) to one or more datasets and maintain the data lineage information as the data is processed. The industrial data lineage and context components 510 may further be configured to generate and/or extract contextual information (e.g., where did the data come from and what was going on within the system at that time?) to one or more datasets and maintain the contextual information as the data is processed.

The industrial data access controls 512 may include one or more rules or policies to be applied to data access such that only devices, components, people, personas, profiles, and so forth that are authorized to access the data have access to the data. In some embodiments the industrial data access controls 512 may include one or more pipeline components configured to apply specific rules and/or policies related to data access.

The industrial data pipeline monitoring components 514 may include one or more pipeline components that may be configured to monitor and/or process data output by data sources (e.g., data collection devices, data generating devices, data transmission devices, data processing device, etc.) or other pipeline components. The industrial data connectors 516 may include one or more pipeline components configured to receive and recognize data, transform data based on a data model, associate two or more sets of data, and/or move data from one source to another source (e.g., a data source and a data lake 410. Similarly, the industrial data integration components 518 may also be configured to move data from one source to another, while also performing various data processing tasks, such as cleaning data, transforming data, mapping data, etc.

As shown in FIG. 6, the control plane 506 may retrieve one or more templates and one or more pipeline components from the library 504 and deploy a pipeline 402 to an integration runtime environment 502 via an event bus 520. The event bus 520 communicatively couples the control and design plane 500 to the various integration runtime environments 502. Each integration runtime environment 502 may include a runtime service 522 that hosts one or more pipelines 402. As previously described, the pipelines 402 may be in communication with various applications, products, and or services via the runtime environments 502. For example, as shown the pipelines 402 may be in communication with an industrial historian 524, a manufacturing execution system (MES) 526, one or more live data sources 404, a batch system 528, a customer data lake 410, a customer solution 412, one or more ERP systems 414, one or more intrusion/vulnerability systems 408, and so forth. An industrial historian 524 is a software application configured to collect, store, and analyze time-series data from various sources (e.g., live data sources 404) within an industrial system, acting as a dedicated database for industrial process data, and allowing enterprises to monitor trends, identify anomalies, and tune manufacturing processes by analyzing data over time. An MES 526 is an application that monitors, tracks, documents, and controls a manufacturing process from raw materials to finished products, providing real-time visibility into production activities and acting as a bridge between production planning systems and the actual manufacturing process itself to improve efficiency, quality control, and overall production output. A batch system 528 is configured to process large groups of data or tasks together, instead of individually, collecting data and processing all of the data at once when convenient, allowing for efficient processing of large volumes of information during off-peak hours, often without direct user interaction.

As shown in FIG. 6, the control and design plane 500 may include a management plane 530, which may be configured to interface with the control plane 506 to monitor operation of the instantiations of the runtime service 522 and/or the pipelines 402 in the integration runtime environments 502. Whereas the control plane 506 focuses on real-time activities against deployed runtimes (e.g., start, stop, debug runtimes, some policy enforcement, etc.), the management plane 530 focuses on pipeline configurations, defining policies, pipeline deployments, lifecycle management, presentation of telemetry, operational insights, and so forth. The control and design plane 500 also includes a sandbox 532 and a walled garden 534, which are described in more detail below. The sandbox 532 is a secure are in which new or otherwise untrusted components may run with limited or no access to other components. Accordingly, new or otherwise untrusted components may run in the sandbox without affecting or otherwise causing issues with the other components. The control and design plane 500 and/or one or more policies of an enterprise may state that a component has to run in the sandbox 532 for a specified period of time or otherwise pass one of more tests to establish trust and operate in a normal integration runtime environment 502. Though the sandbox 532 is shown in FIG. 6 as being hosted within the control and design plane 500, it should be understood that in some embodiments, the sandbox 532 may run in its own container or on a piece of hardware that is separate from the control and design plane 500. Similarly, the walled garden 534 may be hosted within the control and design plane 500, or may be hosted by a separate container and/or piece of hardware. The walled garden 534 may be a secure environment in which components run. As shown, in some embodiments, the walled garden 534 may include a secure registry and/or one or more secure components 536.

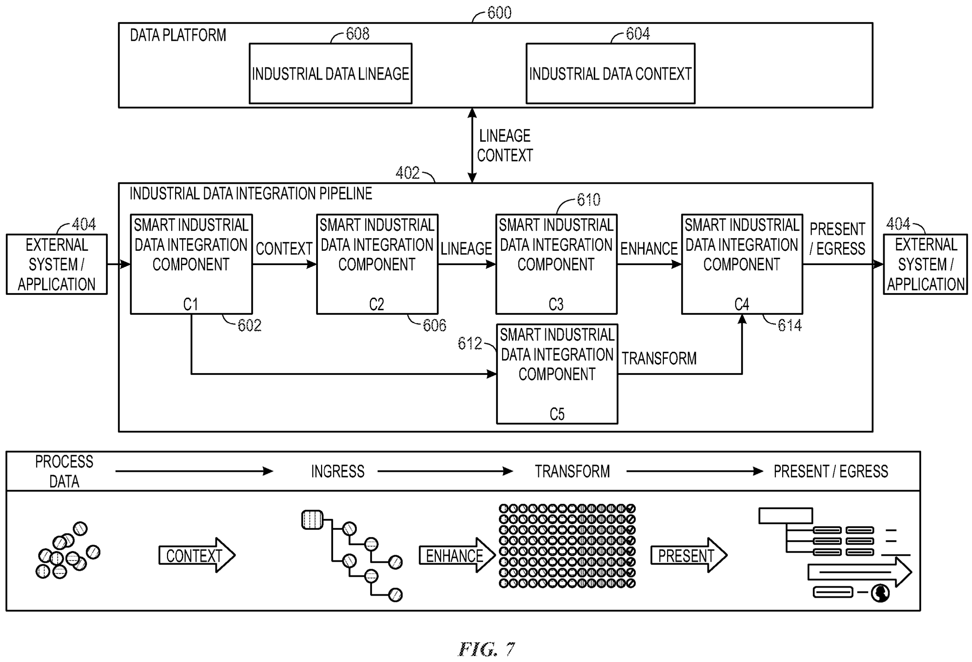

FIG. 7 is a schematic of a data integration pipeline 402 configured to build context and data lineage as part of the pipeline's 402 execution. Enterprises in some industries may wish to include data context and data lineage in their data collection. For example, if decisions are made based on collected data, the enterprise may wish to identify anomalous data and trace the anomalous data back to a data source (e.g., context), understand what was happening when the data was collected/generates, and/or establish that the data had not been tampered with or otherwise manipulates since its generation/collection (e.g., lineage). Accordingly, the pipeline 402 shown in FIG. 7 may be configured to generate and monitor data lineage and context for data that it processes. As shown, the pipeline 402 may be in communication with a data platform 600, from which data may be retrieved and to which data may be transmitted. The data platform 600 may include databases, data lakes, and/or other mediums for storing data.

The pipeline 402 receives data from an external system or application 404. As previously described, the data may have been collected or generated by the external system or application 404, or the data may have been collected or generated by another device and passed to the external system or application 404 directly, or via one or more intermediaries. The pipeline 402 may be associated with a particular data model of an industrial system. Accordingly, the pipeline 402 may be configured to receive data and recognize the data as being associated with the data model. The data is provided to a context component 602, which is configured to generate or extract context for the data. The context data may be generated or extracted from the data based on characteristics of the data and/or where the data came from. Context data may include, for example, identification of data sources, data attributes, the context in which data was generated (e.g., identification specific production execution, assets, equipment, process, plant, etc.), and so forth. In some embodiments, a system may collect values for the same metric (e.g., pills produced per minute) from multiple locations within a system. Accordingly, in such embodiments, the context component 602 may be able to identify which data came from what machine and generate context data that identifies the source of each data set. In some embodiments, the context data may be generated based on metadata or signatures in the received data, or that accompany the received data, that indicate a source of the data. In other embodiments, the application or device that receives the data from the original generator and/or collector of the data may identify the original generator and/or collector of the data and transmit that information along with the data to the context component 602 or to an intermediary, which may subsequently transmit the data along with the identification of the original generator and/or collector to the context component 602 or one or more additional intermediaries. The context data may be separate from the underlying data or may accompany the data as metadata. Further, the context data may be stored in a data model, either on its own, or along with the other data.

Once generated, the context component 602 may transmit the context data (e.g., via the pipeline 402) to a data context store 604 in the data platform 600. The data context store 604 may be a database, a data model, a data lake, and the like. Once the context data is stored in the data context store 604, the pipeline 402, or other pipelines 402 for that matter, may subsequently retrieve the context data from the data context store 604 during processing.

The context data may also be transmitted, either separately or along with the data received from the external system/application 404, to a data lineage component 606. The data lineage component 606 may be configured to generate and/or extract information about the chain of custody of the data between generation/collection and receipt by the pipeline 402. The lineage data may include, for example, a traceability record of the data's source and devices/applications that have handled the data since generation/collection, information about the flow of the data from generation/collection to the pipeline 402, information about transformation of the data between generation/collection and receipt by the pipeline 402, usage of the data between generation/collection and receipt by the pipeline 402, and so forth. Accordingly, the lineage data may include information about what devices/applications have handled the data since it was collected/generated and what those devices/applications did to the data. As such, the lineage data may be used to establish that the data has not been tampered with or manipulated. As with the context data, the lineage data may be separate from the underlying data or may accompany the data as metadata. Further, as with the context data, the lineage data may be stored in a data model, either on its own, or along with the other data.

Once generated, the lineage component 606 may transmit the lineage data (e.g., via the pipeline 402) to a data lineage store 608 in the data platform 600. The data lineage store 608 may be a database, a data model, a data lake, and the like. Once the lineage data is stored in the data lineage store 608, the pipeline 402, or other pipelines 402 for that matter, may subsequently retrieve the context data from the data context store 604 during processing.

The lineage data may also be transmitted, along with the data received from the external system/application 404, and/or the context data, to a data enhancement component 610 configured to enhance the data received from the external system/application 404. Data enhancement involves transforming raw industrial data into actionable intelligence through data cleaning, standardization, and enrichment with external sources. That is, data enhancement may include improving the quality and usefulness of data collected from industrial operations by adding relevant information, cleaning up inconsistencies, and structuring the data to gain deeper insights and make better informed decisions regarding production processes, equipment maintenance, and overall operational efficiency within a manufacturing environment. Data enhancement may involve one or more of data cleaning (e.g., removing outliers, handling missing values, and standardizing data formats), data aggregation (e.g., combining data from multiple sources to create a comprehensive view), data enrichment (e.g., appending additional relevant information from external sources like weather data or market trends), feature engineering (e.g., creating new data features that can be more predictive for specific analysis needs), or some combination thereof. Accordingly, the data enhancement component 610 may help to improve data quality, enable data analysis, improve process efficiency, schedule predictive maintenance, improve quality control, reduce costs, and improve decision making.

As shown, the pipeline 402 may also include a transformation component 612, which may be arranged in parallel with the context component 602, the data lineage component 606, and the data enhancement component 610, or in series with the context component 602, the data lineage component 606, and the data enhancement component 610. The transformation component 612 is configured to convert raw data collected from industrial machinery and process the data into a usable format for analysis. Data transformation may include cleaning, structuring, and/or standardizing the data to extract meaningful insights for improving operations, improving efficiency, and making data-driven decisions within an industrial environment. Data transformation may include, for example, data cleaning (e.g., removing errors, outliers, and inconsistencies), data normalization (e.g., standardizing data formats and units to ensure consistency), data aggregation (e.g., combining data from multiple sources into a consolidated view), feature engineering (e.g., creating new data features from existing data to enhance analysis, and/or data mapping (e.g., converting data from one format to another to match the destination system).

The pipeline 402 also includes a present/egress component 614 which may prepare the data for transmission to external systems and/or applications 404 to display, store, integrate, and so forth. For example, the data may be stored in a database, used to update widgets in a dashboard, used to calculate key performance indicators (KPIs), and so forth. Further, the data may be compared to thresholds, acceptable ranges, expected values, benchmarks, etc. to make decisions about generating alerts/alarms/notifications, adjusting operating parameters, putting devices or systems into a safe mode, shutting devices or systems down, etc. Accordingly, the generated data may be used to make decisions about the operation of the industrial system.

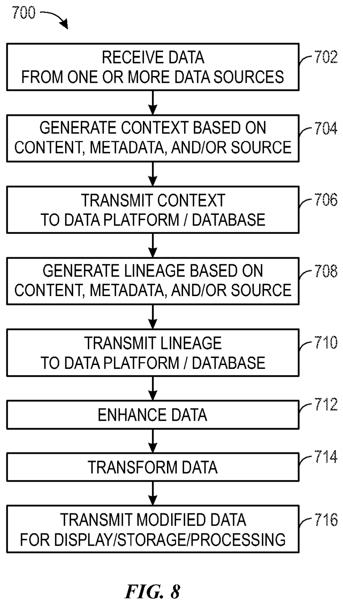

FIG. 8 is a flow chart of a process 700 for building context and data lineage as part of the pipeline's 402 execution. At 702, the process 700 receives data from one or more data sources. The data sources may include devices or applications that generate or collect data. The data may be received directly from the data sources, or may be received via a chain of one or more intermediaries that receive the data directly from the data source and pass the data along toward the pipeline.

At 704, the process 700 generates (e.g., via a context component of the pipeline) context for the data received at 702. The context data may be generated or extracted from the data based on characteristics of the data and/or where the data came from. Context data may identify, for example, data sources, data attributes, the context in which data was generated (e.g., identification of specific production execution, assets, equipment, process, plant, etc.), and so forth. The context data may be generated based on metadata or signatures in the received data, or that accompany the received data, that indicate a source of the data. In other embodiments, the application or device that receives the data from the original generator and/or collector of the data may identify the original generator and/or collector of the data and transmit that information along with the data to the pipeline (e.g., directly or via an intermediary). For example, the process 700 may collect values for the same metric (e.g., pills produced per minute) from multiple locations within a system. Accordingly, in such embodiments, the process 700 may be able to identify which data came from what machine and generate context data that identifies the source of each data set. The context data may be separate from the underlying data or may accompany the data as metadata. Further, the context data may be stored in a data model, either on its own, or along with the other data. At 706, the process 700 transmits the context data to a data platform or database. The context data may be stored in a database, a data model, a data lake, and the like.

At 708, the process 700 generates (e.g., via a data lineage component of the pipeline) lineage data for the data received as 702. The lineage data may reflect the chain of custody of the data between generation/collection and receipt by the pipeline. The lineage data may include, for example, a traceability record of the data's source and devices/applications that have handled the data since generation/collection, information about the flow of the data from generation/collection to the pipeline, information about transformation of the data between generation/collection and receipt by the pipeline, usage of the data between generation/collection and receipt by the pipeline, information about what devices/applications have handled the data since it was collected/generated and what those devices/applications did to the data, and so forth. Accordingly, the lineage data may be used to establish that the data has not been tampered with or manipulated since collection/generation. As with the context data, the lineage data may be separate from the underlying data or may accompany the data as metadata. Moreover, as with the context data, the lineage data may be stored in a data model, either on its own, or along with the other data. At 710, the process 700 transmits the lineage data to a data platform or database. The lineage data may be stored in a database, a data model, a data lake, and the like.

At 712, the process 700 enhances the data (e.g., via a data enhancement component). Data enhancement involves transforming raw industrial data into actionable intelligence through data cleaning, standardization, and enrichment with external sources. Accordingly, data enhancement may include adding relevant information, cleaning up inconsistencies, and structuring data to gain deeper insights and make better informed decisions regarding production processes, equipment maintenance, and overall operational efficiency within a manufacturing environment. Data enhancement may also include data cleaning (e.g., removing outliers, handling missing values, and standardizing data formats), data aggregation (e.g., combining data from multiple sources to create a comprehensive view), data enrichment (e.g., appending additional relevant information from external sources like weather data or market trends), feature engineering (e.g., creating new data features that can be more predictive for specific analysis needs), or some combination thereof. Accordingly, data enhancement may help to improve data quality, enable data analysis, improve process efficiency, schedule predictive maintenance, improve quality control, reduce costs, and improve decision making.

At 714, the process 700 transforms the data (e.g., via a transformation component). The transformation may include, for example, cleaning, structuring, and/or standardizing the data to extract insights for improving operations, improving efficiency, and making data-driven decisions within an industrial environment. Accordingly, the data transformation may include, for example, data cleaning (e.g., removing errors, outliers, and inconsistencies), data normalization (e.g., standardizing data formats and units to ensure consistency), data aggregation (e.g., combining data from multiple sources into a consolidated view), feature engineering (e.g., creating new data features from existing data to enhance analysis, and/or data mapping (e.g., converting data from one format to another to match the destination system). At 716, the process 700 transmits the modified data for display, storage, integration, and/or processing, and so forth.

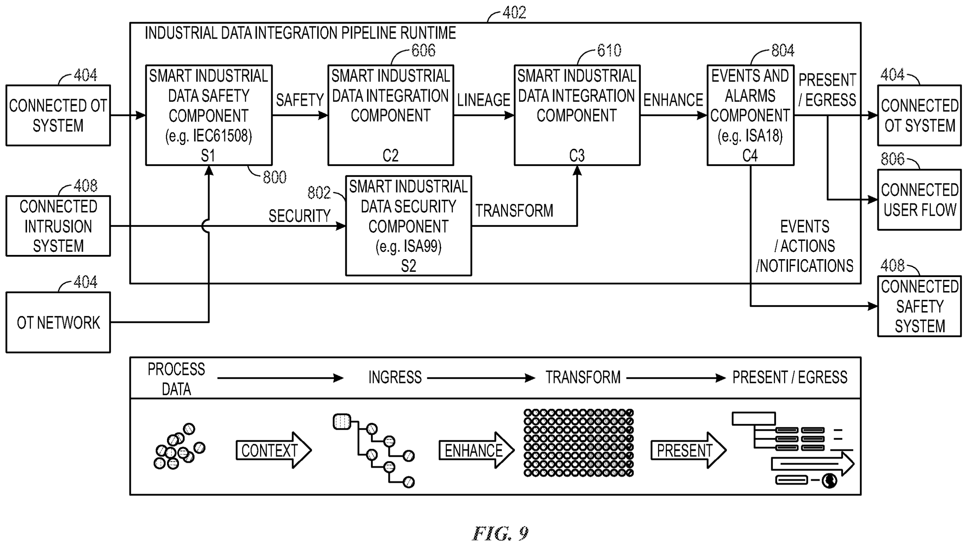

FIG. 9 is a schematic of an industrial data integration pipeline 402 having a security event trigger. As shown, the data integration pipeline 402 includes a safety component 800 that is configured to receive operational data from a data source 404, such as a connected OT system, a connected OT network, an application, and so forth. The safety component 800 may be configured to receive the operational data from the one or more data sources 404 and process the data by generating, extracting, isolating, etc. safety data. This may include, for example, comparing one or more values from the operational data to one or more thresholds, expected data ranges, benchmark data, and so forth, to identify values in the operational data that may be indicative of safety-related conditions or events that may warrant further investigation and/or action. Further, the safety component 800 may be configured to apply one or more safety policies, algorithms, and so forth to identify safety-related conditions that may warrant further investigation and/or action. Additionally the safety component 800 may be configured to calculate one or more safety KPIs or other metrics that may be useful in identifying various safety-related conditions.

The safety component 800 may pass data to the lineage component 606 which, as previously described, generates a chain of custody for the operational data between the original source of the operational data and the data integration pipeline 402 to establish that the operational data has not been tampered with or otherwise manipulated since its collection and/or generation. If the lineage component 606 does find evidence that the operational data was tampered with or otherwise manipulated, the lineage component 606 may generate lineage data that is indicative of the tampering and/or manipulation.

As shown and previously described, the data integration pipeline 402 may also receive data from a vulnerability detection product or service 408, which may be configured to detect vulnerabilities and/or intrusions into the OT network. If such a vulnerability and/or intrusion is detected, the vulnerability detection product or service 408 provides relevant data to a security component 802 of the data integration pipeline 402, which may receive the data, generate/extract relevant security data, and in some cases transform the security data so it can be combined with the operational data. For example, the security component 802 may be configured to identify security threats (e.g., unauthorized network device access), controller run level changes, safety interlock failures, and so forth. In some embodiments, the security component 802 may be configured to comply with various safety and/or security standards, such as IEC61508, ISA18, ISA99, and so forth. In some embodiments, the security component 802 may be configured to detect controller run-level changes and/or new devices connected to the OT network (e.g., a Nmap component) and take appropriate action. In some embodiments, the security component 802 may be configured to trigger security alarms, events, and/or safety interlock events in response to detected conditions or activity. In some embodiments, the security component 802 may be configured to support generation of alarms, events, and.or notifications across connected systems and/or workflows. The security component 802 may also be configured to integrate with the instruction detection system 408 to lock down one or more devices and/or the entire industrial automation system.

The lineage component 606 and the safety component 800 transmit data to the data enhancement component 610 which, as previously described, uses various techniques to combine and enhance the received data. The data enhancement component 610 passes the data to the events and alarms component 804, which outputs data to one or more connected OT systems, a connected user flow 806 (e.g., for use in a workflow), to connected safety systems 408, and so forth. Accordingly, based on certain safety and/or security (e.g., vulnerability, intrusion, etc.) conditions being detected, the events and alarms component 804 may generate events, actions, notifications, and so forth to the safety system 408. Based on what safety and/or security systems are detected, the safety system 408 may be configured to take certain actions to address the safety/security condition, as well as to protect people in and around the industrial automation system and components of the industrial automation system. For example, the safety system 408 may generate alerts or alarms, shut down parts or all of the industrial automation system, put some or all of the industrial automation system into a safe mode, revoke access credentials for certain devices, personas, profiles, and so forth.

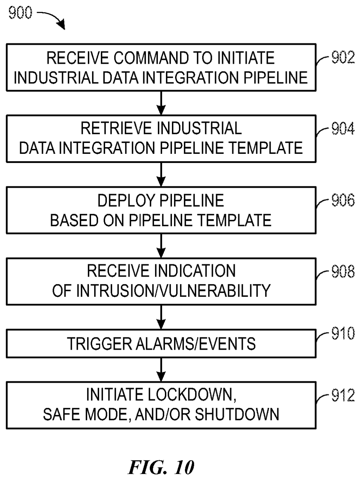

FIG. 10 is a flow chart of a process 900 for an industrial data integration pipeline with a security event trigger. At 902, the process 900 receives a command to initiate an industrial data integration pipeline. The command may be generated in response to an event taking place or some condition being detected (e.g., a threshold being exceeded, an error code, etc.), a set period of time elapsing, a scheduled time occurring, upon request, and so forth. At 904, the process 900 retrieves an industrial data integration pipeline template from a library. The template includes or otherwise identifies the various components of the pipeline.

At 906, the process 900 deploys the data integration pipeline to the runtime environment. In some embodiments, deployment may include deploying one or more containers to the device hosting the runtime environment. In other embodiments, the one or more containers in which the data integration pipeline runs may already be deployed. Deployment of the data integration pipeline may further include generating a package of scripts and/or code defining the data integration pipeline and its runtime components and transmitting the package to the device hosting the data integration pipeline for execution. Thereafter, the process 900 monitors operation of the pipeline. If the operation of the pipeline is not as expected and/or planned, the process may adjust the runtime behavior of the pipeline. This may include, for example, adjusting one or more operational parameters of one or more components of the data integration pipeline.

At 908, the process 900 receives an indication of an intrusion, vulnerability, or other safety/security incident. For example, as previously discussed, the pipeline may include a safety component configured to receive the operational data from one or more data sources and process the data by generating, extracting, isolating, etc. safety data. For example, the safety component may be configured to compare one or more values from the operational data to one or more thresholds, expected data ranges, benchmark data, and so forth to identify values in the operational data that may be indicative of safety-related conditions that may warrant further investigation and/or action, apply one or more safety policies, algorithms, and so forth to identify safety-related conditions that may warrant further investigation and/or action, calculate one or more safety KPIs or other metrics that may be useful in identifying various safety-related conditions, and so forth. Accordingly, the process 900 may receive some indication of a safety incident or condition. Additionally, the process may also receive data from a vulnerability detection product or service configured to detect vulnerabilities and/or intrusions into the OT network. If the vulnerability detection product or service detects a vulnerability and/or intrusion, the vulnerability detection product or service provides relevant data to a security component of the data integration pipeline, which may receive the data, and generate/extract relevant security data. Based on the received safety/vulnerability data, the process identifies that a safety/vulnerability incident has taken place or condition is present and determines what, if any, action should be taken. For example, the process 900 may generate events, actions, notifications, and so forth. At 912, based on what safety and/or security systems are detected, the process 900 may be configured to take certain actions to address the safety/security condition, as well as to protect people in and around the industrial automation system and components of the industrial automation system. For example, process 900 may shut down parts or all of the industrial automation system, put some or all of the industrial automation system into a safe mode, revoke access credentials for certain devices, personas, profiles, and so forth.

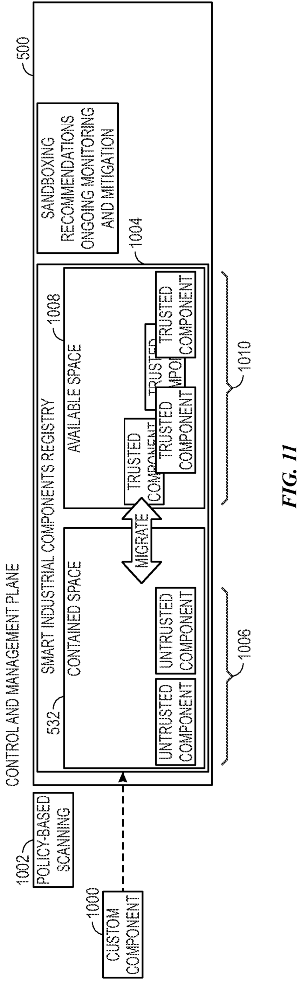

FIG. 11 is a schematic illustrating sandboxing untrusted components. As shown, the control plane 500 receives a new component 1000 to add to the library of components that can be deployed in an industrial data integration pipeline. The new component 1000 shown in FIG. 11 is a custom component. For example, a user may have selected an existing component (e.g., provided by a service provider, retrieved from a library, etc.) or generated a new component based on a component template and made customizations to the component based on how the user plans to deploy the new component 1000 in a runtime environment, the particulars of an industrial automation system with which the new component 1000 will interact once deployed, and/or other factors. However, in some embodiments, the new component 1000 may not necessarily be a custom component. For example, the new component 1000 may have been received from a service provider or retrieved from a library and provided to the control plane 500 without any customizations.

Upon receipt of the new component 1000, the control plane 500 may perform policy-based scanning 1002 to determine how to handle the new component 1000. For example, during the policy-based scanning 1002, the control plane 500 may apply one or more active policies to determine whether or not the new component 1000 should be trusted. For example, the policies may consider the source of the new component 1000, the extent of the customizations of the new component 1000, what the new component 1000 does, whether the new component 1000 is in communication with any services, devices, and/or components outside of the data integration pipeline, whether the new component 1000 shows any evidence of known vulnerabilities or intrusion vectors, whether the new component 1000 includes any signatures, certificates, and/or verifications indicating its trustworthiness, and so forth. In some embodiments, the policy-based scanning 1002 may include calculating a security score that considers the possibility of threats and/or vulnerabilities. Policies may allow/forbid interaction with external systems, devices, applications, etc. Accordingly, the control plane 500 manages and monitors policies for all container runtime environments.

After the control plane 500 performs the policy-based scanning 1002, the new component 1000 is added to a components registry. If the policy-based scanning 1002 determines that the new component 1000 is untrusted (e.g., the security score is above or below some threshold), the new component 1000 is deployed in a sandbox 532 that may include one or more other untrusted components 1006. As used herein, a sandbox 532 is a secure, isolated environment where components, code, applications, and/or files can be run without risking damage to the main system or production environment, allowing for experimentation and testing of components/features, and/or safe analysis of potentially malicious code. Though FIG. 11 shows the sandbox 532 as running on the same device and/or in the same container as the control plane 500, it should be understood that embodiments are envisaged in which the sandbox 532 runs on a different device and/or in a different container as the control plane 500 in order to separate the sandbox from the control plane.

If the policy-based scanning 1002 determines that the new component 1000 is trusted (e.g., the security score is above or below some threshold), the new component 1000 is deployed in available space 1008 that may include one or more other trusted components 1010. After the untrusted components 1006 in the sandbox 532 have established their trustworthiness (e.g., by running for a set amount of time without incident, passing additional testing, etc.), the untrusted components 1006 that have proven their trustworthiness may be migrated to the available space 1008 with the trusted components 1010 and may be subsequently deployed to runtime environments as part of industrial data integration pipelines.

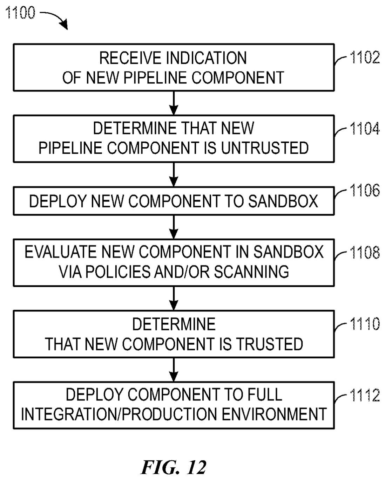

FIG. 12 is a flow chart of a process 1100 for sandboxing untrusted components. At 1102, the process 1100 receives an indication of a new pipeline component. In some embodiments, the new component may be a custom component. For example, the custom component may be a customized instantiation of an existing component (e.g., provided by a service provider, retrieved from a library, etc.) that has been customized for a particular process, environment, system, and/or combination of devices. In other embodiments, the new component may be a component generated based on a component template and customized based on planned deployment in a run time environment, the particulars of an industrial automation system with which the new component will interact once deployed, and/or other factors. In further embodiments, the new component may have been received from a service provider or retrieved from a library and provided to the control plane without any customizations.

At 1104, the process 1100 determines that the new component is untrusted. As previously described, this may include performing policy-based scanning to determine how to handle the new component. For example, the process 1100 may apply one or more policies to determine whether or not the component should be trusted. Such policies may allow and/or forbid interaction with external systems, devices, applications, etc. In determining whether the new component is trusted, the policies may consider the source of the new component, the extent of the customizations of the new component, what the new component does, whether the new component is in communication with any services, devices, and/or components outside of the data integration pipeline, whether the new component shows any evidence of known vulnerabilities or intrusion vectors, whether the new component includes any signatures, certificates, and/or verifications indicating its trustworthiness, and so forth. In some embodiments, the policy-based scanning may include calculating a security score that considers the possibility of threats and/or vulnerabilities. Accordingly, the process 1100 may compare the security score to one or more threshold values to determine whether the new component is trusted or untrusted, and/or a degree to which the new component is trusted.

At 1106, the process 1100 deploys the new untrusted component to a sandbox, which is a secure, isolated environment where components, code, applications, and/or files can be run without risking damage to other components, hardware, or the production environment, allowing for experimentation and testing of components/features. In some embodiments, the sandbox may run on the same device and/or in the same container as the control plane. In other embodiments, the sandbox may run on a different device and/or in a different container as the control plane in order to separate the sandbox from the control plane. In some embodiments, the process 1100 may also add the new component to a component registry. At 1108, the process 1100 evaluates the new component in the sandbox by applying policies, scanning the component for known vulnerabilities/features, and or running tests on the component by executing one or more test scripts. After undergoing testing/scanning and/or running in the sandbox for a threshold period of time without incident, the process 1100 may, at 1110, determine that the component has demonstrated its trustworthiness and is trusted. In some embodiments, the process 1100 may migrate the new component to available space within the control plane with other trusted components. At 1112, the process 1100 may deploy the component to a full integration/production runtime environment as part of a data integration pipeline.

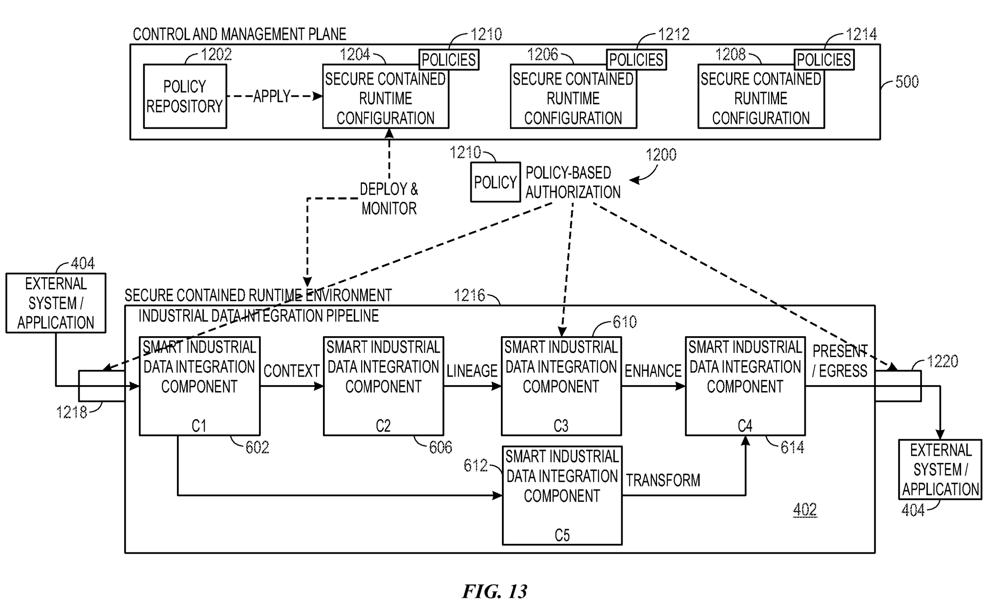

FIG. 13 is a schematic illustrating policy-based authorization 1200 for an industrial data integration pipeline 402. As shown in FIG. 13, the control plane 500 includes a policy repository 1202 that includes policies that may be applied by the control plane 500 when deploying and managing the operation of industrial data integration pipelines 402. The policies may dictate, for example, what components can communicate with one another, component data access (e.g., read access, write access, etc.), allowed configuration changes, whether components are trusted or untrusted, known vulnerabilities, security policies, and so forth. The control plane 500 includes secure contained runtime configurations 1204, 1206, 1208 for respective industrial data integration pipelines 402 the control plane 500 manages. Each of the secure contained runtime configurations 1204, 1206, 1208 has an associated set of policies 1210, 1212, 1214 from the policy repository 1202 that the control plane 500 applies when managing the respective industrial data integration pipelines 402.

As shown, in some embodiments, an industrial data integration pipeline 402 may be deployed to a secure contained runtime environment 1216, which is managed by the control plane 500 based on a secure contained runtime configuration 1204. In some embodiments, the secure contained runtime environment 1216 may be the walled garden 534 shown in FIG. 6. In some embodiments, the secure contained runtime environment 1216 may be like a sandbox that operates on a different device or in a different container than the control plane 500. Accordingly, the control plane 500 applies one or more policies 1210 to perform policy-based authorization 1200 during operation of the industrial data integration pipeline 402 such that actions can only be taken that are in compliance with the policies 1210. For example, if one or more components 602, 606, 610, 612, 614 of the industrial data integration pipeline 402 want to interact with applications, devices, systems, etc. that are outside of the industrial data integration pipeline 402, access needs to be enabled through policies. As such, only authorized defined communications are allowed to pass through the perimeters of the secure contained runtime environment 1216.

To achieve this, the secure contained runtime environment 1216 includes an ingress component 1218 and an egress component 1220, which may act as firewalls for the industrial data integration pipeline 402 and the secure contained runtime environment 1216. The ingress component 1218 receives data to be transmitted to the industrial data integration pipeline 402 in the secure contained runtime environment 1216 and applies the one or more policies 1210 to determine whether the data should be allowed to pass through the ingress component 1218 to the industrial data integration pipeline 402 in the secure contained runtime environment 1216. If the data does not comply with the policies 1210, the ingress component 1218 declines to pass the data into the secure contained runtime environment 1216. If the data does comply with the policies 1210, the ingress component 1218 allows the data to pass to the industrial data integration pipeline 402 in the secure contained runtime environment 1216. Similarly, the egress component 1220 receives data to be transmitted out of the industrial data integration pipeline 402 in the secure contained runtime environment 1216 and applies the one or more policies 1210 to determine whether the data should be allowed to pass through the egress component 1220 from the industrial data integration pipeline 402 in the secure contained runtime environment 1216 to external systems 404 (e.g., other devices, systems, applications, etc.). If the data does not comply with the policies 1210, the egress component 1220 declines to pass the data to the external sources/applications 404. If the data does comply with the policies 1210, the egress component 1220 allows the data to pass to the external sources/applications 404.

Policies 1210, 1212, 1214 may be created, modified, removed, activated, deactivated, and so forth via the control plane 500, which allows for management and monitoring of related policies and changes. Accordingly, authorized users may be able to use the control plane 500 to manage policies 1210, 1212, 1214 in the policy repository 1202 and thus manage access to connected OT and/or IT systems.

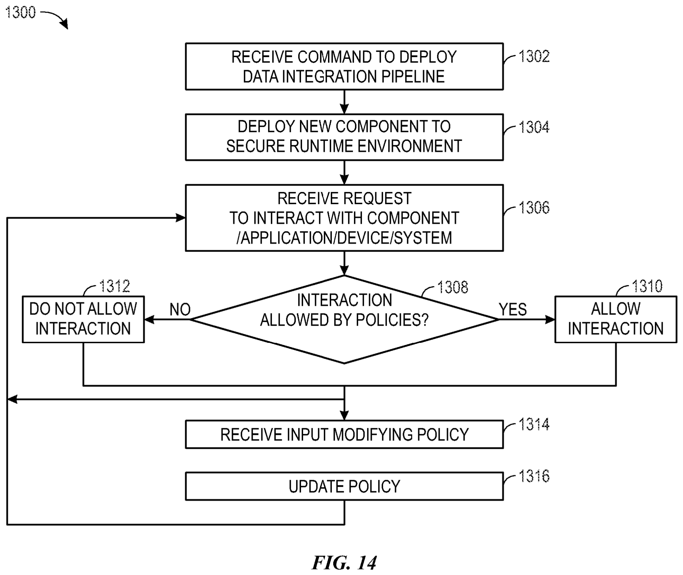

FIG. 14 is a flow chart of a process 1300 for policy-based authorization for an industrial data integration pipeline. At 1302, the process 1300 receives a command to deploy a data integration pipeline. The command may be generated in response to an event taking place or some condition being detected (e.g., a threshold being exceeded, an error code, etc.), a set period of time elapsing, a scheduled time occurring, upon request, and so forth. At 1304, the process 1300 deploys the data integration pipeline to a secure runtime environment. In some embodiments, the command may specify that the data integration pipeline is to be deployed in the secure runtime environment. In other embodiments, application of one or more policies may determine that the data integration pipeline is to be deployed in the secure runtime environment. In some embodiments, deployment may include deploying one or more containers to the device hosting the secure runtime environment. In other embodiments, the one or more containers in which the data integration pipeline runs may already be deployed. Deployment of the data integration pipeline may further include generating a package of scripts and/or code defining the data integration pipeline and its runtime components and transmitting the package to the device hosting the data integration pipeline for execution. Thereafter, the process 1300 monitors operation of the pipeline. If the operation of the pipeline is not as expected and/or planned, the process may adjust the runtime behavior of the pipeline. This may include, for example, adjusting one or more operational parameters of one or more components of the data integration pipeline.

At 1306, the process 1300 receives a request from an external system or application to interact with one or more components in the data integration pipeline, or from one or more components of the data integration pipeline to an external system or application. At decision 1308, the process 1300 determines whether the interaction is allowed by one or more policies. If the interaction is allowed, the process 1300 proceeds to block 1310 and allows the interaction. If the interaction is not allowed, the process 1300 proceeds to block 1312 and does not allow the interaction. The process 1330 may then proceed to block 1306 and receive another request to interact with a component, application, device, and/or system, or proceed to block 1314 and receive an input adding, removing, or modifying a policy. At 1316, the policy is updated based on the input.

The present disclosure is directed to techniques for using an industrial data integration pipeline to detect safety and/or security events and/or conditions in industrial automation systems, and/or the OT networks that support the industrial automation systems. Specifically, the industrial data integration pipeline may be configured to receive data indicative of an event or condition related to safety or security of the industrial automation system, generate an alert in response to the event of condition, identify an action to address the event or condition, and automatically initiate the action (e.g., output a command to the industrial automation system). In some embodiments, the industrial data integration pipeline may include a safety component configured to receive operational data collected during operation of the industrial automation system and generate safety data from the operational data, extract safety data from the operational data, or both. In such embodiments, the safety component may be configured to compare one or more values from the operational data to one or more thresholds, one or more expected data ranges, one or more benchmark data points, or any combination thereof. Further, the safety component may be configured to identify one or more values in the operational data that are indicative of safety-related conditions that warrant investigation, action, or both. The safety component may also be configured to apply one or more safety policies, one or more algorithms, or both, to identify one or more safety-related conditions that warrant further investigation, action, or both. Additionally, the safety component may be configured to calculate one or more safety key performance indicators (KPIs) used to identify one or more safety-related conditions. The industrial data integration pipeline may also include a security component configured to receive the data from a security service and generate security data from the data, extract security data from the data, or both. In such embodiments, the security component may be configured to identify, from the data provided by the security service, one or more security-related conditions that warrant investigation, action, or both. In some embodiments, the data may be provided to the industrial data integration pipeline by an intrusion detection system. In some embodiments, the action may include shutting down some or all of industrial automation system, putting some or all of industrial automation system into safe mode, revoking access credentials for one or more devices, one or more personas, one or more profiles, or any combination thereof. The industrial data integration pipeline may further be configured to transmit the alert to a safety system associated with the industrial automation system. Technical effects of the disclosed techniques includes earlier detection of safety and/or security events and/or conditions in industrial automation systems, and/or the operational technology (OT) networks that support the industrial automation systems, resulting in industrial automation systems that are safer and more secure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

## Claims

1. A non-transitory computer readable medium storing instructions that, when executed by processing circuitry, cause the processing circuitry to perform operations comprising:
receiving, at a data integration pipeline, data indicative of an event or a condition, wherein the event or the condition is related to safety or security of an industrial automation system;
generating an alert in response to the event or the condition;
identifying an action to address the event or the condition; and
automatically initiating the action.

2. The non-transitory computer readable medium of claim 1, wherein the data integration pipeline comprises a safety component configured to:
receive the data, wherein the data comprises operational data collected during operation of the industrial automation system; and
generate, extract, or both, safety data from the operational data.

3. The non-transitory computer readable medium of claim 2, at least one of:
wherein the safety component is configured to compare one or more values from the operational data to one or more thresholds, one or more expected data ranges, one or more benchmark data points, or any combination thereof;
wherein the safety component is configured to identify one or more values in the operational data that are indicative of safety-related conditions that warrant investigation, further action, or both;
wherein the safety component is configured to apply one or more safety policies, one or more algorithms, or both, to identify one or more safety-related conditions that warrant further investigation, further action, or both; and
wherein the safety component is configured to calculate one or more safety key performance indicators (KPIs) used to identify one or more safety-related conditions.

4. The non-transitory computer readable medium of one of claims 1 to 3, wherein the data integration pipeline comprises a security component configured to:
receive the data from a security service; and
generate, extract, or both, security data from the data.

5. The non-transitory computer readable medium of claim 4, wherein the security component is configured to identify, from the data provided by the security service, one or more security-related conditions that warrant investigation, further action, or both.

6. The non-transitory computer readable medium of one of claims 1 to 5, wherein the data is received from an intrusion detection system.

7. The non-transitory computer readable medium of one of claims 1 to 6, wherein the action comprises shutting down some or all of the industrial automation system, putting some or all of the industrial automation system into safe mode, or both.

8. The non-transitory computer readable medium of one of claims 1 to 7, wherein the action comprises revoking access credentials for one or more devices, one or more personas, one or more profiles, or any combination thereof.

9. A non-transitory computer readable medium storing instructions that, when executed by processing circuitry, cause the processing circuitry to perform operations comprising:
receiving a command to deploy a data integration pipeline configured to process operational data generated during operation of an industrial automation system;
retrieving a data integration pipeline template from a library, wherein the data integration pipeline template comprises a plurality of components;
deploying the data integration pipeline to a runtime environment, wherein the data integration pipeline is configured to:
receive data indicative of an event or a condition, wherein the event or the condition is related to safety or security of the industrial automation system;
generate an alert in response to the event or the condition;
identify an action to address the event or the condition; and
automatically initiate the action.

10. The non-transitory computer readable medium of claim 9, wherein the data integration pipeline comprises a safety component configured to:
receive the data, wherein the data comprises operational data collected during operation of the industrial automation system; and
generate, extract, or both safety data from the operational data.

11. The non-transitory computer readable medium of claim 10, wherein the safety component is configured to compare one or more values from the operational data to one or more thresholds, one or more expected data ranges, one or more benchmark data points, or any combination thereof.

12. The non-transitory computer readable medium of claim 10 or 11, at least one of:
wherein the safety component is configured to identify one or more values in the operational data that are indicative of safety-related conditions that warrant investigation, further action, or both; and
wherein the safety component is configured to calculate one or more safety key performance indicators (KPIs) used to identify one or more safety-related conditions.

13. The non-transitory computer readable medium of one of claims 10 to 12, wherein the data integration pipeline comprises a security component configured to:
receive the data from a security service; and
generate, extract, or both, security data from the data.

14. A method, comprising:
receiving, at a data integration pipeline, data indicative of an event or a condition, wherein the event or the condition is related to safety or security of an industrial automation system;
generating an alert in response to the event or the condition;
identifying an action to address the event or the condition; and
automatically initiating the action.

15. The method of claim 14, at least one of:
comprising transmitting the alert to a safety system associated with the industrial automation system; and
wherein automatically initiating the action comprises outputting a command to the industrial automation system.
